(19) Europäisches Patentamt
European Patent Office
Office européen des brevets

(11) Veröffentlichungsnummer : **0 108 721**
**B1**

(12) # EUROPÄISCHE PATENTSCHRIFT

(45) Veröffentlichungstag der Patentschrift : **30.12.86**

(21) Anmeldenummer : **83810500.5**

(22) Anmeldetag : **31.10.83**

(51) Int. Cl.⁴ : **C 09 B 67/40**, C 09 B 67/30, D 06 P 1/52, D 06 P 1/667

(54) **Wässrige Präparate von in Wasser unlöslichen oder schwerlöslichen Farbstoffen.**

(30) Priorität : **04.11.82 CH 6415/82**

(43) Veröffentlichungstag der Anmeldung : **16.05.84 Patentblatt 84/20**

(45) Bekanntmachung des Hinweises auf die Patenterteilung : **30.12.86 Patentblatt 86/52**

(84) Benannte Vertragsstaaten : **CH DE FR GB IT LI**

(56) Entgegenhaltungen :
**DE-A- 2 525 859**
**CHEMICAL ABSTRACTS, Band 93, Nr. 10, 8. September 1980, Seite 77, Nr. 96729p, Columbus, Ohio, US**

(73) Patentinhaber : **CIBA-GEIGY AG**
**Klybeckstrasse 141**
**CH-4002 Basel (CH)**

(72) Erfinder : **Lauton, Alain, Dr.**
**Rue de-Baerenfels 8**
***F-68300 Saint-Louis (FR)***
Erfinder : **Koci, Zdenek**
**Rebgasse 39**
**CH-4102 Binningen (CH)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 108 721 B1**

Jouve, 18, rue St-Denis, 75001 Paris, France

**Beschreibung**

Die vorliegende Erfindung betrifft wässrige Präparate von in Wasser unlöslichen oder schwerlöslichen Farbstoffen, ein Verfahren zu deren Herstellung, sowie deren Verwendung zum Färben von Textilmaterialien.

Beim Färben von Textilmaterialien nach dem Kontinueverfahren mit wasserunlöslichen oder in Wasser schwerlöslichen Farbstoffen werden oftmals unegale Färbungen erhalten, was seine Ursache u. a. darin hat, dass beim Trocknen des imprägnierten und abgequetschten Textilmaterials die Farbstoffe auf dem Textilmaterial migrieren. Um diesen Nachteil zu überwinden, wurde bereits vorgeschlagen, dem Klotzbad spezielle Migrationsinhibitoren zuzugeben.

Bei diesen Migrationsinhibitoren handelt es sich vor allem um hochmolekulare, wasserlösliche Polymere, die im allgemeinen nicht zur Herstellung von Flüssigformulierungen verwendet werden können, weil sie agglomerierend wirken und damit lagerinstabile Präparate ergeben. Bei der überwiegenden Anzahl von Farbstoffen sind zudem solche Produkte auch wegen ihrer hohen Viskosität nicht einsetzbar.

Es ist auch bekannt, bereits bei der Herstellung flüssiger Farbstoffpräparate spezifische Migrationsinhibitoren zuzumischen ; derartige Präparate sind z. B. beschrieben in der US-PS 3 484 180 (Methylcellulose) und der US-PS 3 139 321 (Gemische aus monomeren und polymeren quaternären Salzen von Dialkylaminoacrylacrylaten), sowie in der DT-PS 1 290 521 (Tetraalkylbutin-1,4-diole). Nachteil der so erhaltenen Formulierungen ist jedoch deren für die Praxis ungenügende Lager- und Temperaturstabilität sowie deren Nichtredispergierbarkeit.

In der DAS 2 816 539 wird ferner angegeben, Polycarboxylate zur Herstellung wenig migrierender flüssiger Farbstoffpräparate zu verwenden. Um eine gute Lagerstabilität der flüssigen Form, und besonders deren Redispergierbarkeit zu gewährleisten, benötigt man hier jedoch zusätzlich spezielle Redispergierbarkeitsverbesserer.

Der Erfindung lag daher die Aufgabe zugrunde wässrige Präparate von in Wasser unlöslichen oder schwerlöslichen Farbstoffen herzustellen, die einerseits eine genügend gute Lagerstabilität und Redispergierbarkeit aufweisen und andererseits Ausfärbungen ergeben, die während der Zwischentrocknung weitgehend migrationsstabil sind.

Ueberraschenderweise wurde gefunden, dass bei Zusatz eines Telomeren der Formel I

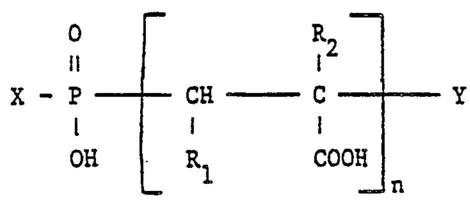

oder dessen Salz, worin

X Wasserstoff oder

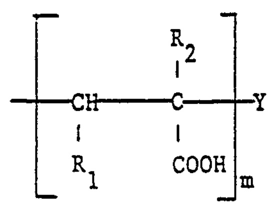

Y Wasserstoff,

$-SO_4H$ oder 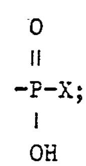

$R_1$ und $R_2$ unabhängig voneinander Wasserstoff, gegebenenfalls durch eine Carboxylgruppe substituiertes Alkyl $C_1$-$C_4$ oder den Carboxylrest bedeuten ; und die Summe der Indices n + m eine ganze Zahl von 2 bis 350 ist, Flüssigformulierungen erhalten werden, die die genannten Nachteile nicht aufweisen.

Gegenstand der Erfindung sind somit wässrige Farbstoffpräparate, die neben Wasser, mindestens

einem in Wasser unlöslichen oder schwerlöslichen Farbstoff, einem anionischen Dispergiermittel, sowie gegebenenfalls weiteren Zusätzen, mindestens ein Telomer der Formel I enthalten.

Diese Präparate zeigen gegenüber bekannten Flüssigformulierungen, die kein Telomer der Formel I enthalten eine bessere Lagerstabilität, ohne dass durch diesen Zusatz die Migration des Farbstoffs auf dem noch feuchten, imprägnierten Gewebe erhöht wird. Ferner zeichnen sich die Präparate durch eine gute Redispergierbarkeit aus, sodass der Zusatz relativ teurer Redispergierbarkeitsverbesserer nicht nötig ist. Die erfindungsgemäss verwendeten Telomere haben zudem ein gutes Komplexierungsvermögen, sodass zur Herstellung der neuen Flüssigpräparate auch hartes Wasser problemlos eingesetzt werden kann.

Die Telomere der Formel I können auch in Form ihrer Salze verwendet werden, z. B. als Alkalimetall-, Ammonium- oder Mono-, Di- oder Tri-(hydroxyäthyl)- oder -(hydroxypropyl)-ammonium Salz.

Bevorzugt sind solche Telomere der Formel I in denen X und Y die bereits angegebene Bedeutung haben und die Reste $R_1$ und $R_2$ unabhängig voneinander Wasserstoff oder Methyl bedeuten und für die n + m eine ganze Zahl von 5 bis 70 ist.

Die Telomere sind vorwiegend in einer Konzentration von 0,5 bis 30 Gew.% bezogen auf das fertige Präparat, in den Flüssigformulierungen enthalten.

Bei den erfindungsgemäss verwendeten Telomeren handelt es sich um Polymere aus Hypophosphoriger Säure und α,β-ungesättigten Carbonsäuren. Derartige Polymere sind bekannt oder können nach bekannten Methoden hergestellt werden, wie z. B. in der US-Patentschrift 2 957 931 beschrieben. Im allgemeinen geht man so vor, dass Hypophosphorige Säure oder deren wasserlösliche Salze als Telogen, zusammen mit einer α,β-ungesättigten Mono-, Di- oder Tricarbonsäure telomerisiert wird. Verwendet werden können auch Gemische verschiedener Carbonsäuren ; so lässt sich beispielsweise die Acrylsäure bei der Herstellung von Hypophosphit/Acrylat-Telomeren teilweise gegen Methacryl-, Malein- oder Itakonsäure ersetzen. Gestartet wird die Reaktion durch einen Initiator, z. B. Peroxodisulfat.

Das Molekulargewicht der zur Herstellung der erfindungsgemässen Präparate verwendeten Telomeren variiert von 200 bis 50 000, dabei kommen auf 1 Mol Hypophosphit etwa 5 bis 20 Mol α,β-ungesättigte Carbonsäure.

Die in den Flüssigformulierungen enthaltenen wasserunlöslichen bzw.-schwerlöslichen Farbstoffe sind solche, die bei einer Temperatur von 20 °C eine Wasserlöslichkeit von weniger als 1 g/l aufweisen. Es handelt sich koloristisch gesehen, vor allem um Dispersionsfarbstoffe, Küpenfarbstoffe, Schwefelfarbstoffe und um Pigmentfarbstoffe, die chemisch den verschiedensten Klassen angehören.

Bei den Dispersionsfarbstoffen handelt es sich beispielsweise um von Carbon- und/oder Sulfonsäuregruppen freie Nitro-, Aminoketon-, Ketonimin-, Methin-, Polymethin-, Diphenylamin-, Chinolin-, Benzimidazol-, Xanthen-, Oxazin-, Aminonaphthochinon- oder Cumarinfarbstoffe und insbesondere um Anthrachinon- und Azofarbstoffe, wie Mono- oder Disazofarbstoffe. Bei den Küpenfarbstoffen handelt es sich um Farbstoffe, die in fester, dispergierter Form auf das Gewebe aufgebracht werden und nach dem Entwickeln wieder in wasserunlöslicher Form vorliegen.

Die erfindungsgemässen Präparate können neben Einzelfarbstoffen auch Farbstoffmischungen enthalten, wobei es sich auch um Kombinationen von in Wasser unlöslichen bzw. schwerlöslichen Farbstoffen mit wasserlöslichen Farbstoffen handeln kann, sofern Mischgewebe z. B. aus Polyester/Baumwolle gefärbt werden soll.

Bevorzugt enthalten die Präparate einen Küpen-, Schwefel-, Pigment- oder Dispersfarbstoff.

Neben dem Telomer der Formel I enthalten die wässrigen Farbstoffpräparate als weitere oberflächenaktive Substanz noch ein anionisches Dispergiermittel. Als anionisches Dispergiermittel kommen vor allem Ligninsulfonate in Betracht, z. B. solche, die nach dem Sulfit- oder Kraft-Verfahren gewonnen werden. Vorzugsweise handelt es sich um Produkte, die z. T. hydrolysiert, oxidiert oder desulfoniert bzw. im Fall des Kraft-Verfahrens nachsulfoniert oder sulfomethyliert und nach bekannten Verfahren fraktioniert werden, z. B. nach dem Molekulargewicht und Sulfonierungsgrad. Auch Mischungen aus Sulfit- und Kraftligninsulfonaten sind gut wirksam. Besonders geeignet sind Ligninsulfonate mit einem durchschnittlichen Molekulargewicht zwischen 1 000 und 80 000, einem Gehalt an aktivem Ligninsulfonat von mindestens 80 % und vorzugsweise mit niedrigem Gehalt an mehrwertigen Kationen.

Neben den Ligninsulfonaten kommen insbesondere auch Kondensationsprodukte von aromatischen Sulfonsäuren mit Formaldehyd wie Kondensationsprodukte aus Formaldehyd und Naphthalinsulfonsäuren oder Alkylnaphthalinsulfonsäuren, z. B. das Dinatriumsalz des Di-(6-sulfonaphthyl-2)-methans oder aus Formaldehyd, Naphtfhalinsulfonsäure und Benzolsulfonsäure, ferner Kondensationsprodukte aus Rohkresol, Formaldehyd und Naphthalinsulfonsäure in Frage. Genannt sind ausserdem sulfatierte Alkylenoxidaddukte, sulfatierte, partiell veresterte mehrwertige Alkohole, Alkylsulfonate, Natriumdialkylsulfosuccinate, Alkylbenzolsulfonate, Kondensationsprodukte aus Ditolyläther, Formaldehyd und Schwefelsäure, Kondensationsprodukte aus chlormethylolierten Diphenylen, Naphthalin und Schwefelsäure, aus einkernigen aromatischen Verbindungen, Formaldehyd, Naphtholsulfonsäuren und gegebenenfalls Natriumsulfit oder Kondensationsprodukte aus Naphthalin, Toluol, Formaldehyd und Schwefelsäure.

Normalerweise liegen die anionischen Dispergiermittel in Form ihrer Alkalisalze, ihrer Ammoniumsalze oder ihrer wasserlöslichen Aminsalze vor.

Bei den weiteren Zusätzen, die in den Flüssigformulierungen enthalten sein können, handelt es sich

vor allem um Konservierungsmittel, wie Pentachlorphenolat, Formalin, Chloracetamid und N-Hydroxymethyl-Chloracetamid ; Antifrostmittel, wie Aethylenglykol, Glycerin, Sorbit oder Propylenglykol ; um Antischaummittel, Verdicker, oder Hilfsmittel, die zur Verbesserung der applikatorischen Eigenschaften der Farbstoffpräparate dienen.

Die erfindungsgemässen Farbstoffpräparate enthalten neben Wasser als Dispergiermedium vorzugsweise 5 bis 50 Gew.%, insbesondere 15 bis 30 Gew.% mindestens eines in Wasser unlöslichen oder schwerlöslichen Farbstoffs ; 0,1 bis 20 Gew.%, insbesondere 0,5 bis 3 Gew.% eines anionischen Dispergiermittels ; 0,5 bis 30 Gew.%, insbesondere 10 bis 20 Gew.% eines Telomeren der Formel I ; sowie gegebenenfalls weitere Zusätze in einer Menge von 0,1 bis 30 Gew.%, wobei sich die %-Angaben jeweils auf das fertige Präparat beziehen.

Die Herstellung der neuen wässrigen Farbstoffpräparate erfolgt beispielsweise dadurch, dass man den in Wasser unlöslichen oder schwerlöslichen Farbstoff oder eine derartige Farbstoffe enthaltende Farbstoffmischung, gegebenenfalls in Kombination mit wasserlöslichen Farbstoffen, unter Rühren in eine wässrige Lösung einträgt, die bereits das Telomer der Formel I und ein anionisches Dispergiermittel sowie gegebenenfalls weitere Zusätze enthält, die jedoch auch je nach Bedarf, der Flüssigformulierung am Ende der Herstellung zugesetzt werden können. Das Gemisch wird bei Raumtemperatur während ca. 10 bis 30 Minuten homogenisiert und anschliessend gemahlen, bis eine Dispersion mit einer mittleren Teilchengrösse von kleiner 10 µm, insbesondere kleiner 2 µm vorliegt. Nach Erreichen der gewünschten Teilchengrösse werden die Mahlhilfsmittel abgetrennt und gegebenenfalls die Farbstärke der Flüssigformulierung auf den geforderten Wert eingestellt.

Die erhaltene Farbstoffdispersion ist sehr gut fliessbar, redispergierbar und unverändert über mehrere Monate bei einer Temperatur von — 10 °C bis + 50 °C haltbar. Die Farbstoffe in den erfindungsgemässen Farbstoffpräparaten weisen vor allem bei der Verwendung in Kontinueverfahren eine nur geringfügige Migration auf, die durch Zusatz von üblichen Elektrolyten, wie Glaubersalz oder Kochsalz, im Klotzbad noch vermindert werden kann. Die mit den neuen Flüssigformulierungen hergestellten Klotzflotten sind stabil, es kommt zu keinen Ausfällungen.

Verwendung finden die erfindungsgemässen Flüssigformulierungen, gegebenenfalls nach Verdünnung mit Wasser, vor allem in kontinuierlichen Färbeverfahren (Klotzverfahren) für Textilmaterialien, die mit wasserunlöslichen Farbstoffen anfärbbar sind. Je nach Art der in diesen enthaltenen Farbstoffen kann man etwa Cellulose-, Polyester- oder auch Mischgewebe aus Polyester/Baumwolle färben, wobei das Textilmaterial im Anschluss an den Imprägnier- und Abquetschvorgang zwischengetrocknet wird, z. B. während 2 bis 3 Minuten bei 100 bis 120 °C.

Die C.A. 93, 10, S. 77, Nr. 96729p beschreibt Antimigrationsmitteln aus Acryl- oder Methacrylsäure und Aethylacrylat sowie Acrylamid und hypophosphoriger Säure.

Die folgenden Beispiele veranschaulichen die Erfindung. Temperaturen sind in Grad Celsius angegeben und Teile bedeuten Gewichtsteile. Die einzelnen Tests : Migrations-, Lagerstabilitäts- und Redispergierbarkeits-Test wurden jeweils gemäss den in den DAS 2,816,539 angegebenen Vorschriften durchgeführt.

## Beispiel 1

19,2 Teile des trockenen Farbstoffes der Formel

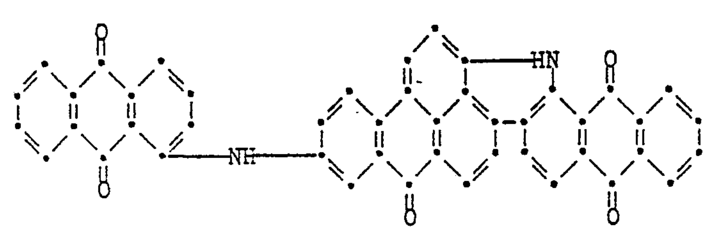

werden langsam unter intensivem Rühren in 30,8 Teile Wasser, enthaltend 2,6 Teile eines Oxyligninsulfonates (0,2 Sulfonatgruppen pro Coniferylalkoholeinheit, M.G. < 40 000), 30 Teile einer 43 %igen wässrigen Lösung eines Telomeren aus Na-Hypophosphit und Acrylsäure ; M.G. ca. 1 000 ; 0,4 Teile Formaldehyd als 37 %ige wässrige Lösung und 17 Teile Glycerin, eingetragen und ca. 20 Minuten bei Raumtemperatur homogenisiert. Die erhaltene Farbstoffsuspension wird sodann in einer offenen Mühle mittels 200 Teilen Siliquarzitkugeln (∅ 3 mm) während 24 Stunden gemahlen, bis die durchschnittliche Teilchengrösse des Farbstoffes ca. 1 µm ist. Nach Abtrennung der Mahlkugeln, erhält man ein flüssiges Farbstoffpräparat, das eine sehr gute Lagerstabilität über 2 Monate bei — 10°, + 40° und + 50° aufweist und gut redispergierbar ist.

Zwei Streifen eines Baumwollgewebes werden mit einer Flotte, enthaltend 40 g/l des oben erhaltenen Farbstoffpräparates unter Zusatz von 5 g/l Glaubersalz und 2 ml/l Essigsäure 80 % laut Migrationstest

foulardiert und 3 Minuten bei 120° getrocknet. Die Färbung ist egal und weist eine Migrationsnote von 4 auf. Wird anstelle des obigen Präparates ein flüssiges Präparat ohne den erfindungsgemässen Zusatz eines Telomeren verwendet, so ist das erhaltene Farbstoffpräparat lagerunstabil und ergibt bei Zusatz von Elektrolyt eine unstabile Klotzflotte.

Beispiel 2

22 Teile des trockenen Farbstoffes der Formel

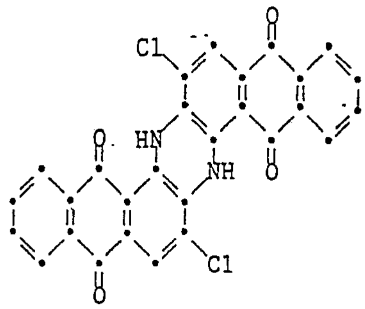

werden unter intensivem Rühren in eine Mischung aus 1,1 Teilen eines anionaktiven Dispergiermittels (Kondensationsprodukt von Formaldehyd mit dem Natriumsalz der Naphthalinsulfonsäure), 27 Teilen einer 43 %igen wässrigen Lösung eines Telomeren aus Na-Hypophosphit und Acrylsäure (M.G. ca. 2 000), 0,4 Teilen Formaldehyd als 37 %ige wässrige Lösung, 22 Teilen einer 70 %igen wässrigen Lösung von Sorbit und 27,5 Teilen Wasser eingetragen und ca. 20 Minuten bei Raumtemperatur homogenisiert.

Diese Farbstoffsuspension wird sodann in einer offenen Mühle mittels 200 Teilen Siliquarzitkugeln (Ø 3 mm) während 20 Stunden gemahlen, bis die durchschnittliche Farbstoffteilchengrösse ca. 1 μm ist. Nach der Abtrennung der Mahlkugeln erhält man ein flüssiges Farbstoffpräparat, das eine sehr gute Lagerstabilität (2 (Monate bei + 40°, + 50° und — 10°) aufweist und gut redispergierbar ist. Bei der Verwendung dieses Farbstoffpräparates zum Foulardieren eines Baumwollgewebes in einer Konzentration von 40 g/l Foulardflotte unter Zusatz von 5 g/l Glaubersalz und 2 ml/l Essigsäure 80 %, weist das egal gefärbte Baumwollgewebe nach der Zwischentrocknung während 3 Minuten bei 120° im Migrationstest eine Migrationsnote von 4 auf.

Verwendet man anstelle des genannten Telomeren gleiche Teile der 43 %igen wässerigen Lösung eines Telomeren aus Na-Hypophosphit und einer Mischung von Acrylsäure und Methacrylsäure im Mengenverhältnis 70 : 30, M.G. ca. 2 000, so erhält man ein Präparat, das sich ebenso durch eine gute Lagerstabilität und Redispergierbarkeit, sowie eine gute Migrationsnote von 4 auszeichnet.

Beispiel 3

22,8 Teile des getrockneten Farbstoffes der Formel

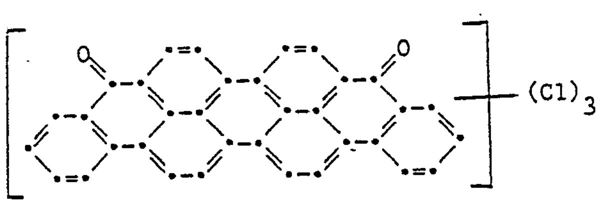

werden unter intensivem Rühren langsam in eine Lösung von 1,6 Teilen eines anionaktiven Dispergiermittels (Kondensationsprodukt von Formaldehyd und dem Natriumsalz der Naphthalinsulfonsäure), 30 Teilen einer 43 %igen wässerigen Lösung eines Telomeren aus Na-Hypophosphit und Acrylsäure (M.G. ca. 1 000) ; 0,4 Teile Formaldehyd als 37 %ige wässrige Lösung, 18 Teilen Glycerin und 27,2 Teilen Wasser eingetragen und ca. 20 Minuten bei Raumtemperatur homogenisiert. Die Farbstoffsuspension wird sodann in einer offenen Mühle mittels 200 Teilen Siliquarzitkugeln (Ø 3 mm) während 17 Stunden gemahlen, bis die durchschnittliche Farbstoffteilchengrösse ca. 1 μm ist. Nach der Abtrennung der Mahlkugeln erhält man ein flüssiges Farbstoffpräparat, das eine gute Lagerstabilität von 2 Monaten bei + 40°, + 50° und — 10° aufweist und gut redispergierbar ist.

Bei der Verwendung dieses Farbstoffpräparates zum Foulardieren eines Baumwollgewebes in einer Konzentration von 40 g/l Foulardflotte unter Zusatz von 5 g/l NaCl und 2 ml/l Essigsäure 80 % erhält man nach der Zwischentrocknung im Migrationstest eine Note von 4-5.

Beispiel 4

27,3 Teile des getrockneten Dispersionsfarbstoffes der Formel

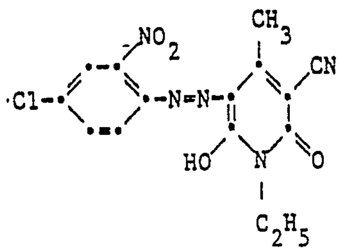

werden unter intensivem Rühren in ein Gemisch aus 5 Teilen eines anionaktiven Dispergiermittels (Kondensationsprodukt von Formaldehyd mit dem Natriumsalz der Naphthalinsulfonsäure und Bis-Chlormethyl-Diphenyl), 25 Teilen einer 43 %igen wässrigen Lösung eines Telomeren aus Na-Hypophosphit und Acrylsäure (M.G. ca. 1 000), 0,4 Teilen Formaldehyd als 37 %ige wässrige Lösung, 20 Teilen Glycerin und 22,3 Teilen Wasser eingetragen und ca. 20 Minuten bei Raumtemperatur homogenisiert. Die Farbstoffsuspension wird sodann in einer offenen Mühle mittels 200 Teilen Siliquarzitkugeln (∅ 3 mm) während 40 Stunden gemahlen, bis die durchschnittliche Farbstoffteilchengrösse ca. 1 µm ist. Nach der Abtrennung der Mahlkugeln erhält man ein flüssiges Farbstoffpräparat, das eine gute Lagerstabilität (1 Monat bei + 40°, + 50° und — 10°) aufweist und gut redispergierbar ist.

Appliziert man dieses Farbstoffpräparat wie im Migrationstest vorgeschrieben mit einer Konzentration von 40 g/l Foulardflotte unter Zusatz von 20 g/l Glaubersalz und 2 ml/l Essigsäure 80 % auf ein Polyester-Baumwolle 67 : 33-Gewebe, so wird dieses nach der Zwischentrocknung (2 Minuten bei 100 °C) mit einer Migrationsnote von 3-4 bewertet, und ist egal gefärbt.

Beispiel 5

19,0 Teile des trockenen Farbstoffes der Formel

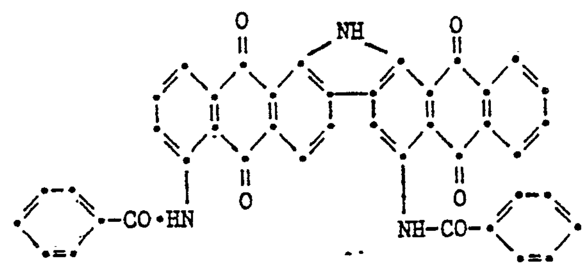

werden langsam unter intensivem Rühren in 35,9 Teile Wasser, enthaltend 1,7 Teile eines Oxyligninsulfonates (0,2 Sulfonatgruppen pro Coniferylalkoholeinheit, M.G. < 40 000), 25 Teile einer 40 %igen wässrigen Lösung eines Telomeren aus Na-Hypophosphit und Methacrylsäure, M.G. ca. 4 000 ; 0,4 Teile Formaldehyd als 37 %ige wässrige Lösung und 18 Teile Glycerin, eingetragen und ca. 20 Minuten bei Raumtemperatur homogenisiert. Die erhaltene Farbstoffsuspension wird sodann in einer offenen Mühle mittels 200 Teilen Siliquarzitkugeln (∅ 3 mm) während 16 Stunden gemahlen, bis die durchschnittliche Teilchengrösse des Farbstoffes ca. 1 µm ist. Nach Abtrennung der Mahlkugeln erhält man ein flüssiges Farbstoffpräparat, das sich durch eine gute Lagerstabilität und Redispergierbarkeit, sowie eine gute Migrationsnote von 4 auszeichnet.

Beispiel 6

19,0 Teile des gleichen Farbstoffes wie im Beispiel 5 werden langsam unter intensivem Rühren in 32,9 Teile Wasser, enthaltend 1,7 Teile eines Oxyligninsulfonates (0,2 Sulfonatgruppen pro Coniferylalkoholeinheit, M.G. < 40 000), 26 Teile einer 46 %igen wässrigen Lösung eines Telomeren aus Na-Hypophosphit und Maleinsäure, M.G. ca. 1 000 ; 0,4 Teile Formaldehyd als 37 %ige wässrige Lösung und 20 Teile Glycerin, eingetragen und ca. 20 Minuten bei Raumtemperatur homogenisiert. Die erhaltene Farbstoffsuspension wird sodann in einer offenen Mühle mittels 200 Teilen Siliquarzitkugeln (∅ 3 mm) während 16 Stunden gemahlen, bis die durchschnittliche Teilchengrösse des Farbstoffes ca. 1 µm ist. Nach Abtrennung der Mahlkugeln erhält man ein flüssiges Farbstoffpräparat, das sich ebenso durch eine gute Lagerstabilität und Redispergierbarkeit, sowie eine gute Migrationsnote 4 auszeichnet.

**Patentansprüche**

1. Wässrige Farbstoffpräparate, bestehend aus mindestens einem, in Wasser unlöslichen oder

schwerlöslichen Farbstoff, einem anionischen Dispergiermittel, sowie gegebenenfalls weiteren Zusätzen, dadurch gekennzeichnet, dass diese mindestens ein Telomer der Formel I

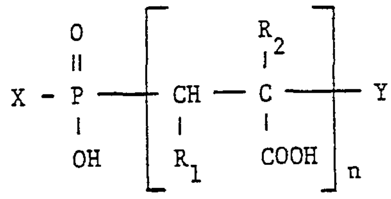 (I)

oder dessen Salz, worin

X Wasserstoff oder

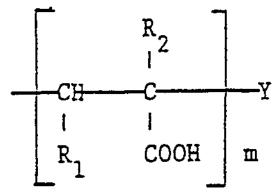

Y Wasserstoff, —$SO_4H$ oder

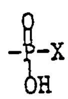

$R_1$ und $R_2$ unabhängig voneinander Wasserstoff, gegebenenfalls durch eine Carboxylgruppe substituiertes Alkyl $C_1$-$C_4$ oder Carboxyl bedeuten ; und m + n eine ganze Zahl von 2 bis 350 ist, enthalten.

2. Wässrige Farbstoffpräparate gemäss Anspruch 1, dadurch gekennzeichnet, dass diese ein Telomer der Formel I enthalten, das als Alkalimetall-, Ammonium- oder Mono-, Di- oder Tri-(hydroxyäthyl) oder -(hydroxypropyl)ammonium-Salz vorliegt.

3. Wässrige Farbstoffpräparate gemäss Ansprüchen 1 und 2, dadurch gekennzeichnet, dass diese ein Telomer der Formel I enthalten, worin X und Y die im Anspruch 1 angegebene Bedeutung haben und $R_1$ und $R_2$ unabhängig voneinander Wasserstoff oder Methyl bedeuten und n + m eine ganze Zahl von 5 bis 70 ist.

4. Wässrige Farbstoffpräparate gemäss Anspruch 1, dadurch gekennzeichnet, dass diese ein Telomer der Formel I in einer Konzentration von 0,5 bis 30, insbesondere 10 bis 20 Gew.% bezogen auf das fertige Präparat enthalten.

5. Verfahren zur Herstellung von wässrigen Farbstoffpräparaten gemäss Anspruch 1, dadurch gekennzeichnet, dass man mindestens einen in Wasser unlöslichen oder schwerlöslichen Farbstoff in eine wässrige Lösung, enthaltend ein anionisches Dispergiermittel und ein Telomer der Formel I einrührt, bei Raumtemperatur homogenisiert und die Dispersion anschliessend mahlt, bis die Teilchengrösse der Farbstoffe kleiner als 10 µm, insbesondere kleiner als 2 µm ist, wobei weitere Zusätze gegebenenfalls vor oder nach der Mahloperation in das Präparat eingearbeitet werden.

6. Verwendung der wässrigen Farbstoffpräparate gemäss Anspruch 1 oder der gemäss dem Verfahren nach Anspruch 5 erhaltenen Präparate zum Färben von Textilmaterialien.

7. Das mit den wässrigen Farbstoffpräparaten gemäss Anspruch 1 gefärbte Textilmaterial.

**Claims**

1. An aqueous dyestuff formulation comprising at least one water-insoluble or sparingly water-soluble dye, an anionic dispersant, as well as optionally further ingredients, which formulation contains at least one telomer of the formula I.

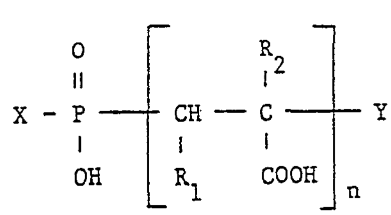 (I)

or a salt thereof, wherein

X is hydrogen or

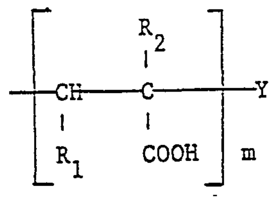

Y is hydrogen, $—SO_4H$ or

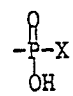

each of $R_1$ and $R_2$ independently of the other is hydrogen, $C_1$-$C_4$alkyl which is unsubstituted or substituted by a carboxyl group, or is carboxyl ; and the sum of n + m is an integer from 2 to 350.

2. An aqueous dyestuff formulation according to claim 1 which contains a telomer of the formula I in the form of an alkali metal salt, an ammonium salt or a mono-, di- or tri(hydroxyethyl) ammonium or mono-, di- or tri(hydroxypropyl) ammonium salt.

3. An aqueous dyestuff formulation according to either of claims 1 or 2 which contains a telomer of the formula I, wherein X and Y are as defined in claim 1 and each of $R_1$ and $R_2$ independently of the other is hydrogen or methyl and the sum of n + m is an integer from 5 to 70.

4. An aqueous dyestuff formulation according to claim 1 which contains a telomer of the formula I in a concentration of 0.5 to 30 % by weight, in particular 10 to 20 % by weight, based on the final formulation.

5. A process for the preparation of an aqueous dyestuff formulation according to claim 1, which process comprises stirring at least one water-insoluble or sparingly water-soluble dye into an aqueous solution containing an anionic dispersant and a telomer of the formula I, homogenising the mixture at room temperature and subsequently grinding the resultant dispersion until the particle size of the dye is smaller than 10 µm, in particular smaller than 2 µm, optionally with the addition of further ingredients to the formulation before or after the grinding procedure.

6. A method of dyeing textile materials which comprises the use of an aqueous dyestuff formulation according to claim 1 or of a formulation obtained according to the process of claim 5.

7. Textile material dyed with an aqueous dyestuff formulation according to claim 1.

**Revendications**

1. Préparations tinctoriales aqueuses constituées d'au moins un colorant insoluble ou difficilement soluble dans l'eau, un dispersant anionique, ainsi que, le cas échéant, d'autres additifs, caractérisées par le fait qu'elles contiennent au moins un télomère de formule I

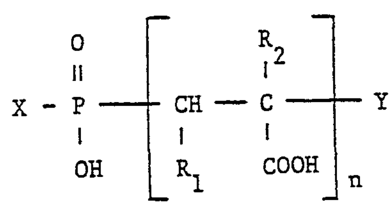

(I)

ou un sel de celui-ci, dans laquelle formule

X représente un atome d'hydrogène ou

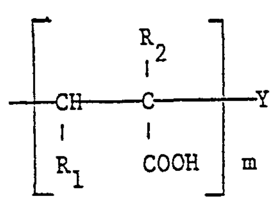

Y représente un atome d'hydrogène, $—SO_4H$ ou

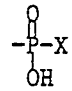

$R_1$ et $R_2$ représentent, indépendamment l'un de l'autre, un atome d'hydrogène ou un radical alkyle en $C_1$-$C_4$ éventuellement substitué par un groupe carboxyle, ou le radical carboxyle ; et la somme m + n est un nombre entier allant de 2 à 350.

2. Préparations tinctoriales aqueuses selon la revendication 1, caractérisées par le fait qu'elles contiennent un télomère de formule I qui se trouve sous forme de sel d'un métal alcalin, d'ammonium ou de mono-, di- ou tri-(hydroxyéthyl)- ou -(hydroxypropyl)-ammonium.

3. Préparations tinctoriales aqueuses selon les revendications 1 et 2, caractérisées par le fait qu'elles contiennent un télomère de formule I dans lequel X et Y ont les significations données dans la revendication 1 et $R_1$ et $R_2$ représentent, indépendamment l'un de l'autre, un atome d'hydrogène ou le groupe méthyle, et la somme n + m est un nombre entier allant de 5 à 70.

4. Préparations tinctoriales aqueuses selon la revendication 1, caractérisées par le fait qu'elles contiennent un télomère de formule I à une concentration de 0,5 à 30, en particulier de 10 à 20 % en poids, par rapport à la préparation finale.

5. Procédé pour la préparation de compositions tinctoriales aqueuses selon la revendication 1, caractérisé par le fait que l'on délaie au moins un colorant, insoluble ou difficilement soluble dans l'eau, dans une solution aqueuse contenant un dispersant anionique et un télomère de formule I, on homogénéise la dispersion à la température ambiante, puis on la broie jusqu'à ce que la taille de particule des colorants soit inférieure à 10 µm, en particulier inférieure à 2 µm, d'autres additifs étant éventuellement incorporés à la composition avant ou après l'opération de broyage.

6. Utilisation des préparations tinctoriales aqueuses selon la revendication 1 ou des préparations obtenues selon le procédé de la revendication 5, pour la teinture de matériaux textiles.

7. Le matériau textile teint avec les préparations tinctoriales aqueuses selon la revendication 1.